# EUROPÄISCHE PATENTSCHRIFT

(11) **EP 3 707 062 B1**
(45) Veröffentlichungstag und Bekanntmachung des Hinweises auf die Patenterteilung: **11.05.2022**
(21) Anmeldenummer: 18807565.9
(22) Anmeldetag: 09.11.2018
(51) Int. Cl.: B62D 21/10, B62D 21/18, B62D 49/06, A01B 59/06

(54) **MULTIFUNKTIONALES ZUG- ODER TRÄGERFAHRZEUG**
MULTIFUNCTIONAL TRACTION OR CARRIER VEHICLE
VÉHICULE TRACTEUR OU PORTEUR MULTIFONCTIONNEL

(30) Priorität: 10.11.2017 DE 102017126475
(43) Veröffentlichungstag der Anmeldung: 16.09.2020
(73) Patentinhaber: SYN TRAC GmbH, 4822 Bad Goisern a.H. (AT)
(72) Erfinder: PUTZ, Stefan, 4822 Bad Goisern (AT)
(74) Vertreter: HGF
(86) Internationale Anmeldenummer: PCT/EP2018/080815
(87) Internationale Veröffentlichungsnummer: WO 2019/092202

(56) Entgegenhaltungen:
- EP-A1- 2 978 299
- DE-A1- 3 222 792
- DE-A1-102007 042 599

## Beschreibung

Ein Traktor ist eine Zugmaschine, die in der Landwirtschaft zum Bewegen und zum Antrieb landwirtschaftlicher Maschinen benutzt wird. Traktoren werden außerhalb der Landwirtschaft in der Forstwirtschaft, bei Kommunalbetrieben, im Gartenbau, auf Flughäfen und im Bauwesen (Straßenbau, Erdbewegung, Garten- und Landschaftsbau) verwendet.

Traktorgetriebe verfügen in der Regel über mehrere Gangabstufungen. Die am Markt befindlichen Extreme bewegen sich von acht Vorwärts- und vier Rückwärtsgängen bis zu 72 Vor- und Rückwärtsgängen. Weiterhin sind auch hydro-mechanische Getriebe erhältlich, die unabhängig von der Motordrehzahl und ohne Kraftflussunterbrechung stufenlos Schleppergeschwindigkeiten von rund 20 Metern pro Stunde bis 60 km/h ermöglichen.

Differentialsperren sind serienmäßig eingebaut, damit bei unterschiedlicher Bodenhaftung der Räder einer Achse nicht das Rad mit der geringeren Bodenhaftung erhöhten Schlupf bis hin zum Durchdrehen aufweist, während das andere Rad auf griffigerem Boden aufgrund der Wirkweise des ungesperrten Differentials bis hin zum Stillstand verzögert wird. Differentialsperren gibt es auch bei Traktoren in verschiedenen Ausführungen, wie z.B. teils automatisch eingreifend als Selbstsperrdifferential, teils manuell aktiviert durch Schalter oder Pedal. Auch unterscheiden sich die eingesetzten Differentialsperren hinsichtlich der Sperrwirkung. Zum Teil verbinden sie beide Räder einer Achse starr, sodass es zu einer vollständigen Sperrwirkung kommt. Andere Bauarten erlauben einen gewissen Schlupf eines Rades.

Moderne Traktoren sind in der Regel mit zuschaltbarem Allradantrieb ausgestattet. Der Allradantrieb besitzt verbreitet die sogenannte Voreilung. Dabei erreichen die Vorderräder eine etwa zwei Prozent höhere Fahrgeschwindigkeit als die Heckräder und beugen somit Verspannungen im Getriebe bei Kurvenfahrten vor.

Der zwangsweise entstehende Schlupf ist tolerierbar, solange keine Straßenfahrt bzw. Arbeiten mit Geschwindigkeiten über 15 km/h stattfinden.

Die vom Motor erzeugte Bewegungsenergie (Rotation) wird über Kurbelwelle und Zapfwellengetriebe auf die angehängten/angebauten Geräte übertragen. Bei der serienmäßigen (Motor-)Zapfwelle wird über ein Zwischengetriebe bei Bedarf eine Drehzahl von 540 oder 1000 Umdrehungen pro Minute geschaltet. Diese liegt standardmäßig im Leistungsoptimum des Motors bei rund 2000 Motorumdrehungen. Ebenfalls erhältlich sind sogenannte Spar- oder ECO-Zapfwellendrehzahlen. Sie erreichen die 540-er oder 1000-er Normdrehzahl bereits bei kraftstoffsparenden 1600 Motorumdrehungen und eignen sich für leichtere Antriebsarbeiten wie z. B. für Heuwender. Ein Sonderfall ist die 430-er Normdrehzahl, welche bei 2000 Motorumdrehungen erreicht wird. Diese Drehzahl, die vor allem in Bergregionen angeboten wird, erlaubt den langsamen Antrieb eines Ladewagens im Heck bei gleichzeitigem Erreichen der vollen 1000-er Drehzahl der Frontzapfwelle.

Bei mit einem Nutzfahrzeug verbindbaren Vorrichtungen wird unterschieden zwischen Anbaugeräten, die (flexibel) bspw. in eine Dreipunkthydraulik eingehängt werden und Aufbaugeräten, die (sehr belastbar) fest mit den Rahmen verbunden sind.

Bei den Anbaugeräten unterscheidet man zwischen Geräten, die lediglich gezogen oder geschoben werden, wie z.B. Anhänger, Drillmaschine, Egge, Pflug, Grubber, Planierschild, Tankwagen, Gülle-Ausbringer, Walzen und Geräten die gleichzeitig gezogen oder vom Traktor getragen und über die Zapfwelle oder hydraulisch angetrieben werden, wie z.B. Anbaustapler, Ballenpresse, Düngerstreuer, Kreiselegge, Entblätterungsmaschine zur Entlaubung von Laubgehölzen in Baumschulen, Feldhäcksler, Fräse, Frontlader, Futtermischwagen, Kehrmaschine, Mähdrescher, oder Geräten, die über die Zapfwelle oder die Hydraulik angetrieben werden, während der Traktor steht, wie z.B. Ballenschneider, Erdlochbohrer, Holzspalter, Kreissäge, Vakuumpumpe für Jauche oder Gülle, Wasserpumpe, Güllemixer, Melkmaschine.

Aufbaugeräte finden sich zum Beispiel bei Fahrzeugen mit forstspezifischen oder kommunalen Ausrüstungen (z. B. Harvesterarme, Seilwinden, Polterschilde, Aufbaukräne- oder - bagger, Auslegermähausrüstungen). Derartige Traktoren stellen einen Übergang zu Spezialmaschinen wie z. B. Forstspezialmaschinen mit Knicklenkung dar.

Viele Geräte, die früher von einem Traktor angetrieben wurden, sind heute selbst so groß und speziell, dass sie sich als eigenständige, selbstfahrende Maschinen durchgesetzt haben, wie z. B. Mähdrescher, Häcksler, Roder oder Forstspezialmaschinen (Harvester, Forwarder).

Eine neue Entwicklung ist, dass Anbaugeräte über das Bussystem ISOBUS an einen Traktor angeschlossen werden. Die Steuerung der Geräte kann dann einheitlich über ein in den Traktor integriertes Bus-Terminal erfolgen, ohne dass für jedes Gerät ein gesondertes Steuergerät im Schlepper montiert werden muss. Das Nachrüsten von älteren Traktor-Modellen mit Bus-Terminals ist ebenfalls möglich.

Bei den meisten landwirtschaftlichen Nutzfahrzeugen bzw. Traktoren kann aufgrund der Motor- und Getriebeanordnung die volle Motorleistung nur über ein Schwungrad nach hinten zum Fahrantrieb oder zur Heckzapfwelle abgegeben werden. Die Leistung für eine Frontzapfwelle wird an der Motorfront abgegriffen und ist prinzipbedingt zumeist auf ca. 30% der Motorleistung beschränkt.

Im kommunalen, land- oder forstwirtschaftlichen Bereich sind eine Vielzahl von Anhängern, Anbaugeräten und aufsetzbaren Werkzeugen bekannt, die unterschiedliche Aufgaben ausführen, beispielsweise Schneepflug, Schneefräse, Kehrvorrichtung, Mähmaschine und dergleichen.Im Betrieb sind hierfür für die unterschiedlichen Anbaugeräte und Aufbaugeräte und in der Regel eine Reihe unterschiedlicher Fahrzeuge mit unterschiedlichen Anhänge- und Kupplungssystemen vorgesehen, welche eine Kupplungsvorrichtung für die unterschiedlichen Anhänger und Aufsätze aufweisen. Üblich sind beispielsweise Zugpendel oder DreipunktKraftheber. Hierbei haben die unterschiedlichen Anhänger und Aufsätze oft sehr unterschiedliche Anforderungen an die Anhänge- und Kupplungssysteme, beispielsweise weil gewisse Anhänger gelenkig angekuppelt werden sollen und andere, wie beispielsweise ein Schneepflug, fest am Fahrzeug befestigt werden sollen.

In der AT 514 147 B1 ist ein Nutzfahrzeug offenbart. Hierbei ist vorgesehen, dass das Fahrzeug einen Mittelmotor und ein neben dem Mittelmotor angeordnetes Getriebe umfasst. Der Mittelmotor und das Getriebe sind mittels einer Getriebeverbindung wirkverbunden, wobei der Mittelmotor, das Getriebe und die Getriebeverbindung U-förmig zueinander angeordnet sind. Die Getriebeverbindung kann beispielsweise als Riementrieb oder Kettentrieb ausgebildet sein oder als eine Kette von Zahnrädern, welche das Drehmoment vom Mittelmotor an das Getriebe weiterleiten. Die Getriebeverbindung und das Getriebe können hierbei eine Getriebeeinheit bilden.

Das Fahrzeug kann eine mittig angeordnete Zapfwelle und/oder eine Antriebswelle aufweisen, welche mit einer Kontaktiereinrichtung wirkverbunden sind, wobei das Drehmoment der Zapfwelle und/oder der Antriebswelle durch die Kontaktiereinrichtung an ein Anbaumodul weitergeleitet werden können.

Als Fahrgestell, Rahmen, Chassis oder Untergestell werden die tragenden Teile von Fahrzeugen bezeichnet. Tragende Teile haben die Funktion, den Antrieb, die Karosserie und die Nutzlast zu tragen und gegen äußere Krafteinwirkungen zu stabilisieren. Bei Fahrzeugen mit selbsttragender Karosserie ist die Karosserie das tragende Element.

Am Fahrgestell sind die Radaufhängungen, alle wesentlichen Antriebselemente wie Getriebe und Motor, gegebenenfalls die Karosserie oder Transportgutbehälter und Anhängerkupplungen befestigt. Fahrgestelle mit Rahmen können auch ohne Karosserie fahrtüchtig sein.

Bei Traktoren sind aufgrund der begrenzten Stirnfläche der Motorhaube die Kühler (klassisch: Kühlwasser-, Ladeluft-, Getriebe- und Hydraulikkühler) sowie Kondensator der Kabinenklimaanlage in Serie im Kühlluftstrom angeordnet. Aufgrund der immer höher werdenden Kühllufteintrittstemperaturen sind die Kühler entsprechend größer zu dimensionieren. Zur Reinigung ist eine Vorrichtung vorgesehen, um die einzelnen Kühlregister zur Reinigung auseinanderzuklappen (entsprechende Verschlauchung und Mechanik erforderlich). Alle Kühler werden von einem Lüfter belüftet, eine unabhängige bedarfsgerechte Regelung des Lüfters ist nicht möglich (-> erhöhter Leistungs- und Kraftstoffbedarf).

Aus der DE 10 2007 042 599 A1 ist ein gattungsgemäßes Trägerfahrzeug für den Betrieb in der Land- und Forstwirtschaft sowie im kommunalen Bereich und im Güterverkehr bekannt, wobei die Fahrerkabine in vertikaler und mindestens in Längsrichtung über ein Parlellogrammgestänge mit dem Fahrzeugrahmen beweglich verbunden ist, wobei der Fahrzeugrahmen ein torsionssteifer Gitterrohrrahmen ist, auf dem ein Hilfsrahmen aufgesetzt ist, der über Verbindungsträger einen Wechselaufbau aufnimmt, wobei die Antriebseinheit aus Fahrmotor, Getriebeeinheit, Hydraulik, Tanks usw. im Fahrzeugrahmen platzsparend und als Einheit demontierbar am Fahrzeugrahmen befestigt ist und wobei die Räder des Fahrzeugs einzeln hydraulisch lenkbar über unabhängige Lenksysteme angetrieben sind, die durch einen Lenkcomputer steuerbar sind.

Aus der DE 32 22 792 A1 ist ein gepanzertes Radkraftfahrzeug bekannt, wobei das Fahrzeug eine Aufteilung eines gepanzerten Radkraftfahrzeuges in Panzeraufbau und ein wannenförmiges Fahrgestellt, in dem Motor, Schaltgetriebe, Achsantrieb und Bremsen untergebracht, die Räder einzeln an Querschwingen aufgehängt sind und das Fahrgestell dergestalt mit dem Panzeraufbau verbunden ist, dass ein ebener Wannenboden entsteht.

Aus der WO 2014/153577 A1 ist ein Koppelungsteil eines Fahrzeugkoppelungssystems bekannt, wobei das Koppelungsteil eine Positioniereinrichtung zum Führen eines Gegenkoppelungsteils in einer Fixierposition bei einem Ankoppelungsvorgang aufweist, dass eine Fixiereinrichtung zwischen einer Freigabestellung und einer Fixierstellung bewegbar angeordnet ist, wobei die Fixiereinrichtung in der Fixierstellung ein Gegenkoppelungsteil in der Fixierposition lagerfest fixieren kann.

Aufgabe der vorliegenden Erfindung ist es, ein kompaktes, multifunktionales und/oder vorzugsweise hochgeländegängiges, Zug- und Trägerfahrzeug, insbesondere für landwirtschaftliche und kommunale Einsätze, bereitzustellen.

Diese Aufgabe wird mit einem Fahrzeug mit den Merkmalen des Anspruches 1 gelöst.

Vorteilhafte Ausgestaltungen sind in den davon abhängigen Unteransprüchen angegeben.

Das erfindungsgemäße Fahrzeug zeichnet sich dadurch aus, dass ein Fahrzeugchassis dieses Fahrzeuges einen Rahmen mit rohrförmigem Element, ein Getriebegehäuse sowie einen Unterboden umfasst. Der Rahmen, das Getriebegehäuse und der Unterboden sind derart miteinander verbunden, dass sie das Fahrzeugchassis und somit einen Tragrahmen für Motor, Karosserie und/oder Nutzlast ausbilden.

Das Fahrzeugchassis ist zum Tragen von Motor, Nebenaggregaten, Karosserie und Nutzlast und zum Stabilisieren dieser Komponenten gegen äußere Krafteinwirkungen ausgebildet.

An dem Fahrzeugchassis können Radaufhängungen, ein Motor, eine Karosserie, eine Kabine und/oder Kopplungseinrichtungen fixiert sein.

Unter einer Kopplungseinrichtung wird im Rahmen der vorliegenden Erfindung ein Teil einer Kopplungsvorrichtung zum Verbinden eines Fahrzeuges mit einem Anbaugerät verstanden, wobei jeweils an Fahrzeug und Anbaugerät korrespondierend ausgebildete Kopplungseinrichtungen vorgesehen sind, die gemeinsam die Kopplungsvorrichtung ausbilden. Eine Kopplungsvorrichtung wird im Folgenden auch Dockingvorrichtung und eine Kopplungseinrichtung wird im Folgenden auch als Dockingeinschub bzw. Dockingaufnahme bezeichnet.

Derartige Kopplungseinrichtungen können im Wesentlichen aus dem Stand der Technik bekannte Einrichtungen, wie z.B. die in der AT 514 147 B1 offenbarte Kontaktiereinrichtung, sein.

Das Getriebegehäuse bildet erfindungsgemäß das zentrale tragende Element des Fahrzeuges bzw. des Fahrzeugchassis aus. Am Getriebegehäuse können Vorder- und Hinterachse mittels einer entsprechenden Verbindungsstruktur, wie z.B. einem Zentralrohrmodul, angebaut sein.

Somit umfasst das Fahrzeugchassis bzw. die Tragstruktur des Fahrzeugs drei Elemente, die direkt bzw. indirekt miteinander verbunden sein können und in vertikaler Richtung in drei verschiedenen Ebenen übereinander angeordnet sind, nämlich der plattenartige Unterboden, das Getriebegehäuse und der Rahmen.

Erfindungsgemäß werden rohrförmige Elemente des Rahmens vorteilhafter Weise als Druckluftspeicher für zumindest eine Pneumatik-Einrichtung ausgebildet. Somit kann der Rahmen einen geschlossenen, luftdichten Druckluftbehälter ausbilden und in platzsparender Weise multifunktional genutzt.

Dadurch, dass der Rahmen oder Teile des Rahmens als Druckluftspeicher ausgeführt ist, übernimmt dieser zwei Funktionen, zum einem trägt er zur Stabilisierung des Chassis bei und zum anderen wird der Platz für einen separaten Druckluftspeicher im Fahrzeug eingespart.

Insbesondere kann vorgesehen sein, dass der Rahmen mit dem Getriebegehäuse und/oder vorzugsweise dem Unterboden über eine in Fahrzeuglängsrichtung vorne liegende und/oder über eine in Fahrzeuglängsrichtung hinten liegende Kopplungseinrichtung verbunden ist.

Das Getriebe kann bezüglich einer sich in Fahrzeug Längsrichtung erstreckenden Mittelachse in etwa seitlich zur Mittelachse in einem zentralen Bereich des Fahrzeuges angeordnet sein. Diese Seite des Fahrzeuges wird im Rahmen der vorliegenden Erfindung als Getriebeseite bezeichnet.

Ein Abtriebs-Bereich des Getriebes kann in etwa zentral in der Fahrzeugmitte derart angeordnet sein, dass das Getriebe zum Antreiben einer sich in Richtung der Mittelachse erstreckenden Antriebswelle und/oder einer sich in Richtung Mittelachse erstreckenden Zapfwelle ausgebildet ist.

Ein Motor des Fahrzeugs kann in Fahrzeuglängsrichtung zentral benachbart zum Getriebe auf einer der Getriebeseite gegenüberliegenden Seite der Mittelachse angeordnet sein wobei diese Seite des Fahrzeugs im Rahmen der Erfindung als Motorseite bezeichnet wird.

Durch eine derartige Anordnung von Getriebe und Motor ergibt sich ein äußerst kompakter Aufbau des Fahrzeuges.

Durch die vorteilhafte Anordnung des Motors als Mittelmotor und des Getriebes in der Fahrzeugmitte kann eine besonders kompakte Bauweise erreicht werden. Durch diese kompakte Bauweise kann selbst beim Vorsehen von Kopplungsvorrichtungen im Frontbereich und im Heckbereich eine geringe Gesamtlänge des Fahrzeuges erzielt werden, welche nicht über die Gesamtlänge eines herkömmlichen vergleichbaren Fahrzeuges hinausgeht oder sogar darunter liegt.

An der Motorseite kann zumindest ein Motorkühler und/oder vorzugsweise ein Ladeluftkühler angeordnet, wobei luftansaugende Stirnwandungen dieser Kühlereinrichtung/en sich in Fahrzeuglängsrichtung erstrecken.

An der Getriebeseite kann ein Getriebekühler und/oder ein Kühler für Hydraulikeinrichtungen angeordnet sein, wobei luftansaugende Stirnwandungen dieser Kühlereinrichtung/en sich ebenfalls in Fahrzeuglängsrichtung erstrecken.

Die Kühlereinrichtungen auf der Motorseite und auf der Getriebeseite sind vorzugsweise mit ihren Stirnwandungen in Fahrzeuglängsrichtung nebeneinander angeordnet.

Auf diese Weise sind die Verbindungen von den Kühleinrichtungen zu den zu kühlenden Komponenten relativ kurz. Dadurch ergibt sich ebenfalls ein äußerst kompakter Aufbau des Fahrzeuges.

Eine derartige Anordnung der Kühlereinrichtungen des Fahrzeuges ist somit dahingehend vorteilhaft, dass diese im Betrieb nicht durch irgend geartete Verunreinigungen, wie beispielsweise Schnee, Staub, Schmutz, biologisches Schnittmaterial, wie beispielsweise Gras, Blätter oder ähnliches zugesetzt bzw. verunreinigt werden und daher immer die für die Zurückkühlung der einzelnen Einrichtungen notwendige Kühlluft bereitstellen können.

Weiterhin lassen sich die Kühlereinrichtungen bzw. deren Lüfter unabhängig voneinander regeln, das heißt die Kühlereinrichtungen sind unabhängig und leistungsoptimiert regelbar.

Auf eine Klappmechanik der Kühlereinrichtungen kann verzichtet werden, da diese durch ihre Anordnung optimal zugänglich zur Reinigung sind.

Weiterhin ermöglicht eine derartige Anordnung der Kühlereinrichtungen einen freien Zugang zu Zapfwelle/n-Verbindungseinrichtungen und/oder Antriebswelle/n-Verbindungseinrichtungen, die in einem Front- und/oder Heckbereich des Fahrzeuges angeordnet sind. Zudem wird es hierdurch ermöglicht, dass Zapf- und Antriebswellen axial vom Heck zur Front des Fahrzeuges durch das Getriebe verlaufen können, ohne dass der Motor oder andere Aggregate im Weg sind. So muss die Frontzapfwelle eben nicht am Motor abgegriffen werden.

Weiterhin können Lüfter der Kühlereinrichtungen als Umkehrlüfter ausgebildet sein, um Verschmutzungen aus Kühlerelementen der Kühlereinrichtungen auszublasen. Hierzu kann eine Steuereinrichtung vorgesehen sein, die in vorbestimmten Intervallen die Lüfter ansteuert, um Verunreinigungen auszublasen.

In einer Fahrtrichtung ist der Motor in Fahrzeuglängsrichtung eingebaut und neben dem Getriebe angeordnet.

Das Getriebe kann eine sich in Fahrzeuglängsrichtung erstreckende Antriebswelle sowie eine ebenfalls sich in Fahrzeuglängsrichtung erstreckende Zapfwelle antreiben.

Das bedeutet, Motor und Getriebe sind parallel zur Fahrzeuglängsrichtung im zentralen Bereich des Fahrzeuges angeordnet, wodurch sich ein zentraler tiefliegender Schwerpunkt des Fahrzeuges ergibt.

Auf diese Weise kann über den einen Quertrieb die gesamte Motorleistung sowohl am Fahrantrieb an eine Front- oder Heckzapfwelle oder auch an Pumpennebenabtrieben abgenommen werden.

Das Getriebe ist derart ausgebildet, dass Quertrieb, Zapfwellenkupplung, Nebenantriebe, VTB-Stufenlosgetriebe, High-Low-Getriebe und Längsdifferenzial in dem Getriebegehäuseverbund integriert sind.

Das Getriebegehäuse ist wie vorstehend bereits aufgezeigt, tragender Teil des Chassis. Der Fahrzeugmotor kann vorzugswiese an einem Schwungradgehäuse fest mit dem Getriebegehäuse verbunden sein und zusätzlich an der Front durch eine seitlich am Getriebegehäuse angebaute Konsole unterstützt werden.

Das Fahrzeugchassis kann sich über drei in vertikaler Richtung übereinander geordnete Ebenen erstrecken, wobei der Unterboden in einer unteren Ebene, das Getriebegehäuse in einer mittleren Ebene und der Rahmen in einer oberen Ebene angeordnet sein kann.

Der Rahmen ist vorzugsweise über die vorderseitige und die rückseitige Kopplungseinrichtung mit dem Getriebegehäuse und dem Unterboden verbunden. Die Kopplungseinrichtung kann dadurch Teil der tragenden Struktur sein.

Die Kopplungseinrichtungen können mit einer Vorder- und einer Hinterachse bzw. mit einem entsprechenden Zentralrohrmodul verbunden sein.

Der Unterboden kann mit einer vorderen Kopplungseinrichtung, der Vorderachse, der Hinterachse und einer hinteren Kopplungseinrichtung verbunden, vorzugsweise verschraubt, sein.

Dadurch, dass das erfindungsgemäße Fahrzeug nahezu spiegelsymmetrisch und äußerst kompakt aufgebaut ist, kann das Fahrzeug beispielsweise durch Drehen eines Fahrzeugsitzes mit entsprechender Bedienungseinrichtung oder durch Drehen der gesamten Kabine in jeder Richtung betrieben und benutzt werden.

Das erfindungsgemäße Fahrzeug wird anhand einer Zeichnung beispielhaft erläutert. Es zeigen dabei:

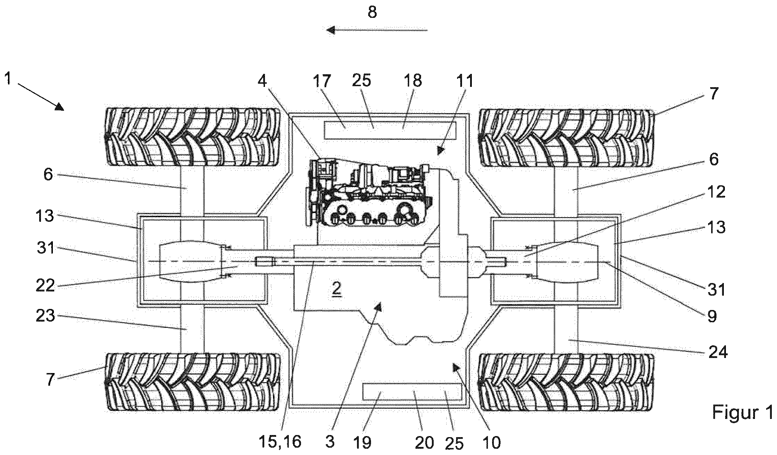

- Figur 1:: eine schematische Draufsicht auf ein erfindungsgemäßes, multifunktionales, hochgeländegängiges Zug- und Trägerfahrzeug,

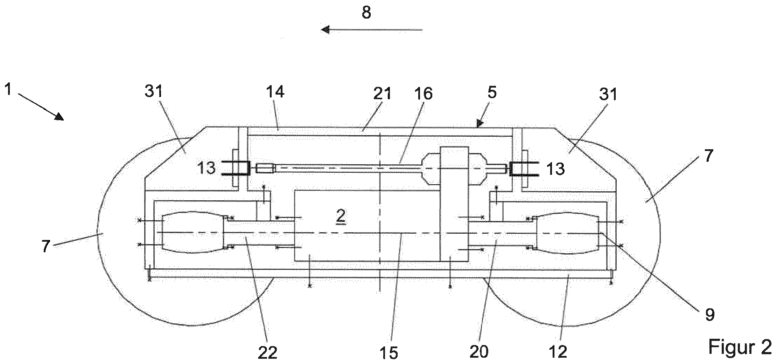

- Figur 2:: eine schematische, seitlich geschnittene Darstellung des Chassis, des erfindungsgemäßen Fahrzeuges,

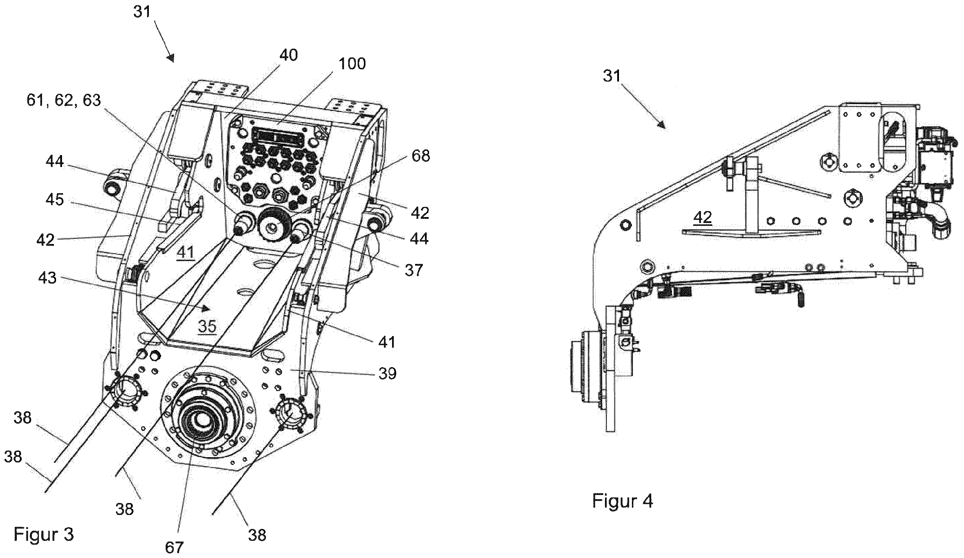

- Figur 3:: eine perspektivische Darstellung einer Dockingaufnahme,
- Figur 4:: eine seitliche Draufsicht auf die Dockingaufnahme,

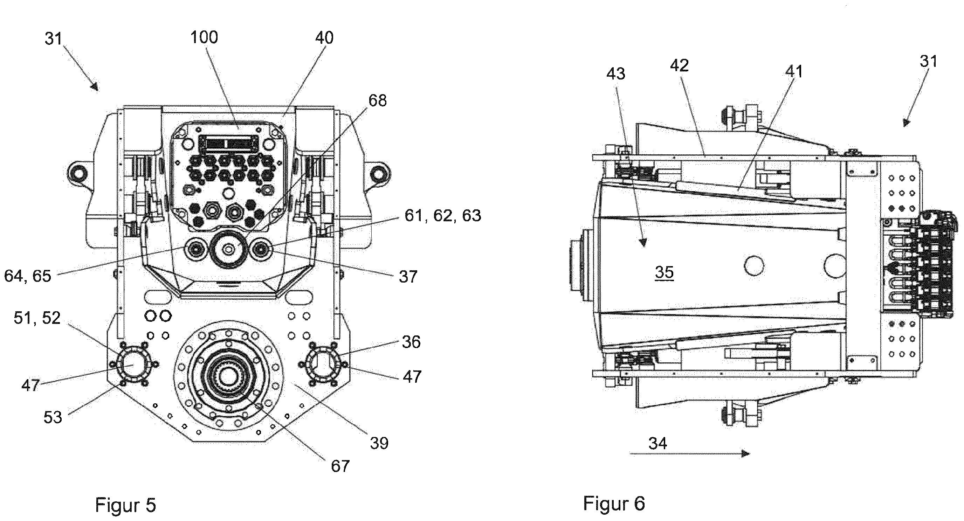

- Figur 5:: eine Draufsicht von vorne auf die Dockingaufnahme, und
- Figur 6:: eine Draufsicht von oben auf die Dockingaufnahme.

Das erfindungsgemäße Fahrzeug 1 kann z. B. mit Allradantrieb ausgebildet sein und umfasst ein in einem Getriebegehäuse 2 angeordnetes Getriebe 3, einen Motor 4, ein Fahrzeugchassis 5 und zwei damit verbundene Achsen 6 mit jeweils zwei Rädern 7.

Das Getriebe 3 ist bezüglich einer sich in einer Fahrzeuglängsrichtung 8 erstreckenden Mittelachse 9 in etwa seitlich neben der Mittelachse in einem zentralen Bereich des Fahrzeugs 1 angeordnet. Diese Seite des Fahrzeugs wird als Getriebeseite 10 bezeichnet.

Der Motor 4 ist in Fahrzeuglängsrichtung 8 zentral benachbart zum Getriebe auf einer zum Getriebe 3 auf einer der Getriebeseite 10 gegenüberliegenden Seite der Mittelachse 9 angeordnet. Diese Seite des Fahrzeugs 1 wird als Motorseite 11 bezeichnet.

In vertikaler Richtung ist unterhalb des Getriebegehäuses ein plattenartiger Unterboden 12 vorgesehen, der mit dem Getriebegehäuse verbunden ist.

In Fahrzeuglängsrichtung 8 vorne und in Fahrzeuglängsrichtung 8 hinten ist der Unterboden 12 über eine Kopplungseinrichtung 13 mit einem Rahmen 14 verbunden.

Das Getriebe 3 bzw. das Getriebegehäuse 2, der damit verbundene Unterboden 12 und der Rahmen 14 bilden das Fahrzeugchassis 5 aus.

Ein Abtriebs-Bereich des Getriebes ist in etwa zentral in der Fahrzeugmitte derart angeordnet, dass das Getriebe 3 zum Antreiben einer sich in Richtung der Mittelachse erstreckenden Antriebswelle 15 und einer in vertikaler Richtung darüber angeordneten und sich ebenfalls in Richtung Mittelachse 9 erstreckenden Zapfwelle 16 ausgebildet ist.

Antriebswelle 15 und Zapfwelle 16 erstrecken sich somit axial beidseitig des Getriebes durch das Fahrzeug 1 vom Heck zur Front.

An der Motorseite 11 ist ein Motorkühler 17 angeordnet, wobei eine luftansaugende Stirnwandung des Motorkühlers 17 sich in Fahrzeuglängsrichtung 8 erstreckt.

Weiterhin ist an der Motorseite ein Ladeluftkühler 18 angeordnet, wobei eine luftansaugende Stirnwandung des Ladeluftkühlers 18 sich ebenfalls in Fahrzeuglängsrichtung 8 erstreckt.

Der Motorkühler 17 und der Ladeluftkühler 18 sind in Fahrzeuglängsrichtung nebeneinander angeordnet.

An der Getriebeseite 10 ist ein Getriebekühler 19 angeordnet, wobei eine luftansaugende Stirnwandung des Getriebekühlers 19 sich in Fahrzeuglängsrichtung 8 erstreckt.

An der Getriebeseite 10 ist ein Kühler für Hydraulikeinrichtungen angeordnet, wobei eine luftansaugende Stirnwandung des Kühlers 20 für Hydraulikeinrichtungen sich ebenfalls in Fahrzeuglängsrichtung 8 erstreckt.

Der Rahmen 14 umfasst zumindest ein rohrförmiges Element welches als Druckluftspeicher 21 für pneumatische Einrichtungen des Fahrzeugs 1 ausgebildet ist.

Das Getriebe ist vorder- und rückseitig über Zentralrohrmodule 22 mit einer Vorderachse 23 und einer Hinterachse 24 verbunden. Die Zentralrohrmodule 22 sind vorzugsweise Teil der Trägerstruktur des Chassis zusammen mit dem Unterboden 12 und dem Rahmen 14.

Diese Achsen 6, 23, 24 sind als Pendelachsen mit hydropneumatischer Federung ausgebildet.

Weiterhin ist ein permanenter Allradantrieb mit Längssperre und Quersperren in den Achsen 6 vorgesehen. Vorzugsweise verfügt das Fahrzeug 1 über eine Allradlenkung.

Die Leistung des Motors 4 beträgt z.B. ca. 220 kw bis 340 kw.

Der Radstand bzw. der Abstand zwischen Vorder- und Hinterachse weist z.B. eine Länge von ca. 3300 mm auf. Das Eigengewicht beträgt ca. 11.500 kg. Die Achslast liegt bei in etwa 10.500 kg.

Als Getriebe 3 ist ein hydraulisch/mechanisch leistungsverzweigtes Getriebe mit stufenlos variabler Übersetzung vorgesehen.

In einem langsamen Fahrbereich sind Geschwindigkeiten von 0 bis 60 km und in einem schnellen Fahrbereich 0 bis 80 km möglich.

Eine maximale Zugkraft kann z.B. bis 136 kN betragen.

Weiterhin ist es möglich, beliebige Anbaugeräte bzw. Arbeitsmodule, die eine entsprechende Kopplungseinrichtung, wie z.B. einen Dockingeinschub aufweisen, über die fahrzeugseitige Kopplungseinrichtung wie z.B. eine Dockingaufnahme des Fahrzeugs mit dem Fahrzeug zu verbinden.

Die Motorzapfwelle, die über die Kopplungseinrichtung mit Anbaugeräten an Front und Heck des Fahrzeugs verbindbar ist, dreht mit 1.000 Umdrehungen pro Minute und einem Drehmoment von 3.000 Nm.

Dadurch, dass die Motorzapfwelle das gesamte Fahrzeug durchgreifend ausgebildet ist, ist es erstmals möglich, die volle Zapfwellenleistung sowohl an der Fahrzeugfront als auch dem Fahrzeugheck zur Verfügung zu stellen. Bei bekannten Fahrzeugen ist die Frontzapfwelle erheblich leistungsschwächer.

Weiterhin ist eine Hydraulikpumpe mit z.B. 180 I pro Minute bei 210 bar und optional bis zu 360 I pro Minute vorgesehen. Die Kopplungseinrichtung kann gemäß einer weiteren Ausführungsform ein Bauteil des Fahrzeugchassis mit tragender Funktion sein. Zusätzlich zur Aufnahme von äußeren Kräften, die durch Anbaugeräte eingeleitet werden, nimmt die Kopplungseinrichtung dann auch die Fahrwerkskräfte von Federungs- und Lenkzylinder der Achsen auf und ist zumindest an Fahrzeugfront und Heck vorgesehen und mit der Unterbodenverkleidung und dem Rahmen verbunden, um das Fahrzeugchassis auszubilden.

Das Fahrzeug weist Federungszylinder mit Kolbenspeichern auf. Diese sind an der Seitenwandung angebaut, um möglichst kurze Leitungswege zu den Federungszylindern realisieren zu können, was positive Auswirkungen auf das Ansprechverhalten der Federung hat (kurze Leitungen - wenig Strömungswiederstand).

In Einführrichtung vorne sind auf der Hinterseite einer am Heck und umgekehrt an der Front eines Fahrzeuges angeordneten Dockingplatte symmetrisch und baugleich zwei Aufnahmen für Lenkzylinder oder Rückstellzylinder vorgesehen. Fahrzeuge mit Zulassung bis 50 km/h haben auf der Vorderachse vorzugsweise einen Lenkzylinder. Fahrzeuge mit Zulassung bis 80 km/h haben auf der Vorderachse vorzugsweise zwei Lenkzylinder.

An einer Hinterachse ist auf einer Seite ein Lenkzylinder und auf der anderen Seite ein Rückstellzylinder verbaut. Die Rückstellzylinder sind mittels eines Membranspeichers vorgespannt und sorgen bei einem Ausfall einer Hinterachslenkung dafür, dass die Achse auf Geradeauslauf gestellt wird.

Durch das Vorsehen einer Dockingaufnahme ist es möglich, eine Vielzahl von Anbaugeräten mit dem Basisfahrzeug zu verbinden.

Im Folgenden wird eine solche Dockingaufnahme 31 (Kopplungseinrichtung) einer Dockingvorrichtung 30 (Kopplungsvorrichtung) zum Aufnehmen eines Dockingeinschubes 32 (Kopplungseinrichtung) beschrieben.

Die Dockingaufnahme 31 umfasst eine in etwa U-förmige Vorzentriereinrichtung 33 mit einer sich in einer Einführrichtung 34 in etwa konisch verjüngenden Einführwanne 35 zum Vorzentrieren eines korrespondierend zur Dockingaufnahme ausgebildeten Dockingeinschubes 32.

Weiterhin sind zumindest eine erste und eine zweite Zentriereinrichtung 36, 37 an der Dockingaufnahme 31 vorgesehen, wobei die erste und die zweite Zentriereinrichtung 36, 37 jeweils zwei Kopplungselementen und/oder Gegenkopplungselemente zum Verbinden mit entsprechenden Kopplungselemente und/oder Gegenkopplungselementen eines Dockingeinschubes 32 umfassen.

Weiterhin sind die erste und die zweite Zentriereinrichtung 36, 37 zum Zentrieren des Dockingeinschubes 32 bezüglich der Dockingaufnahme 31 entlang von vier Zentrierachsen 38 entsprechend der vier Kopplungs- bzw. Gegenkopplungselemente in einer der Einführrichtung 34 ausgebildet. Zudem umfasst die Dockingaufnahme 31 eine Einzugseinrichtung mit zwei hydraulisch betätigbaren Fanghaken 44 zum Einziehen des Dockingeinschubes 23 in die Dockingaufnahme 31 in der Einführrichtung 34.

Die Dockingaufnahme 31 umfasst zwei sich in vertikaler Richtung erstreckende und in horizontaler Richtung versetzt zueinander angeordnete Dockingwandungen 39, 40.

Diese beiden Dockingwandungen 39, 40 sind über eine sich in etwa in horizontaler Richtung erstreckende Einführwanne 35 miteinander verbunden.

Dem entsprechend sind eine erste Dockingwandung 39 in vertikaler Richtung im Bereich unterhalb der Einführwanne 35 und eine zweite Dockingwandung als Begrenzung der Einführwanne 35 in horizontaler Richtung oberhalb der Einführwanne 35 angeordnet.

Die Einführwanne übernimmt die Aufgabe der Vorzentrierung beim Einführen eines Dockingeinschubes in die Dockingaufnahme durch Aufnahme eines korrespondierend zur Einführwanne 35 ausgebildeten Körpers des Dockingeinschubes 32.

Als eine Einführrichtung wird im Rahmen der vorliegenden Erfindung eine Richtung bezeichnet, die sich in etwa in horizontaler Richtung erstreckt und in die ein Dockingeinschub in eine Dockingaufnahme eingeführt wird.

Zum Vorzentrieren des Dockingeinschubes 32 beim Einführen in die Dockingaufnahme 31 verjüngt sich die Geometrie der Einführwanne 35 in Einführrichtung 34, um eine Vorzentrierung des Dockingeinschubes zu ermöglichen.

Quer zur Einführrichtung sind an den beiden Seiten der Einführwanne 35 in etwa quer zur Einführrichtung 34 sich in etwa in vertikaler Richtung erstreckende innere und äußere Seitenwandungen 41, 42 vorgesehen. Diese inneren und äußeren Seitenwandungen 41, 42 sind unter einem vorbestimmten Winkel in Einführrichtung 34 derart angeordnet, dass sich ein Aufnahmeraum 43, begrenzt durch die inneren Seitenwandungen 41 und die Einführ-wanne 35, in Einführrichtung verjüngt.

In den inneren Seitenwandungen 41 sind Fangausnehmungen/Fangzapfenführungen 45 ausgebildet, die zum Führen und Aufnehmen entsprechender, an einem Dockingeinschub 32 ausgebildeter Fanghaken/Fangzapfen vorgesehen sind.

In den inneren und äußeren Seitenwandungen 41, 42 sind in entsprechenden Bohrungen Wellen angeordnet, auf denen die Fanghaken 44 drehbar gelagert sind.

Somit sind die Fanghaken in einem durch die inneren und äußeren Seitenwandungen begrenzten Fanghakenraum angeordnet. Die Fanghaken sind von entsprechenden Fanghakenzylindern 46 betätigbar.

Im Bereich der ersten Dockingwandung 39 sind in etwa buchsenförmige Zentrierzapfenaufnahmen 47 (Gegenkopplungselemente) vorgesehen, die die erste Zentriereinrichtung 36 der Dockingaufnahme 31 ausbilden.

In Einführrichtung 34 ist zunächst die erste Dockingwandung 39 vorgesehen, die zwei Bohrungen 48 zur Aufnahme der buchsenförmigen Zentrierzapfenaufnahmen 47 aufweist.

In den Bohrungen 48 sind die buchsenförmigen Zentrierzapfenaufnahmen 47 angeordnet.

Die buchsenförmigen Zentrierzapfenaufnahmen 47 sind somit in Einführrichtung 34 hinter der ersten Dockingwandung 39 angeordnet.

Die buchsenförmigen Zentrierzapfenaufnahmen 47 umfassen in Einführrichtung 34 einen rohrförmigen Einführ-/Zentrierabschnitt 49 und einen Sicherungsabschnitt 54.

Der rohrförmige Einführ-/Zentrierabschnitt 49 weist eine sich kegelförmig verjüngende Einführausnehmung 50 auf, wobei eine entgegen der Einführrichtung 34 angeordnete vertikale Stirnfläche aus der ersten Dockingwandung 39 hervorsteht und eine erste axiale Anschlagfläche 51 einer ersten Anschlageinrichtung 52 ausbildet. In dieser kreisringförmigen ersten Anschlagfläche 51 sind radial umlaufend und gleich beabstandet voneinander Schmutzabführnuten 53 zum Aufnehmen und Abführen von Verunreinigungen ausgebildet.

Derartige Verschmutzungen würden die Position des Anschlages verändern. Dies ist dahingehend nachteilig, dass keine exakte Kopplung zwischen Dockingaufnahme und Dockingeinrichtung möglich ist.

Der rohrförmige Einführ-/Zentrierabschnitt 49 weist eine sich in Einführrichtung 34 an die Einführausnehmung 50 anschließende zylindrische Zentrierausnehmung 55 auf.

Der rohrförmige Sicherungsabschnitt 57 weist an einer entgegen der Einführrichtung 34 liegenden kreisringförmigen Stirnfläche Bohrungen 56 zum Verbinden mit der ersten Dockingwandung 39, bspw. mittels entsprechender Schraubenverbindungen, auf. Diese Stirnfläche weist einen größeren Durchmesser als der rohrförmige Einführ-/Zentrierabschnitt 49 auf und bildet auf diese Weise eine radial umlaufende Anschlagschulter aus, die ein Verschieben der buchsenförmigen Zentrieraufnahme entgegen der Einführrichtung 34 verhindert.

Die Verriegelungskörper sind von der Hinterseite in einer zylindrischen Bohrung aufgenommen und besitzen einen Bund welcher sich auf der Hinterseite der ersten Platte abstützt. Diese Ausführung hat den Vorteil, dass die Längskräfte die einerseits von Anbaugeräten eingeleitet werden und andererseits durch die Keilkräfte der Keilgabeln überlagert werden, nicht über einen Schraubverband in die Dockingaufnahme eingeleitet werden müssen.

Weiterhin sind im rohrförmigen Sicherungsabschnitt 57 sich in vertikaler Richtung erstreckende Nuten 58 zur Aufnahme von hydraulisch betätigbaren Keilgabeln 59 vorhanden.

Die Keilgabeln 59 sind zum Fixieren eines entsprechenden Zentrierzapfens eines Dockingeinschubes 32 vorgesehen und in vertikaler Richtung von einer Freigabestellung in eine Fixierstellung verschiebbar. Die Keilgabeln 59 bilden somit eine axiale Sicherungseinrichtung 60 aus.

In etwa mittig in der ersten Dockingwandung 39 ist im Bereich zwischen den beiden buchsenförmigen Zentrierzapfenaufnahmen 47 eine Antriebswellenverbindungseinrichtung vorgesehen.

Eine Antriebswellenverbindungseinrichtung ist ein Teil einer Antriebswellenverbindungsvorrichtung zum Verbinden eines fahrzeugseitigen Endes einer Antriebswelle mit einem anbaugeräteseitigen Ende einer Antriebswelle.

In der zweiten Dockingwandung 40 ist eine Ausnehmung 66 zur Aufnahme einer Kupplungsplatte 100 zum Bereitstellen von elektrischen, elektronischen, hydraulischen und/oder pneumatischen Verbindungen zwischen einem Fahrzeug und einem Anbaugerät ausgebildet.

Die Kupplungsplatte 100 mit angeflanschtem Ventilblock kann durch Lösen von nur vier Schrauben zu Reparaturzwecken sehr einfach und schnell entgegen der Einführrichtung 34 ausgebaut werden. Die Kupplungsplatte 100 besitzt in Querrichtung ggf. etwas Spiel, ist im Betrieb aber axial an der Dockingeinrichtung befestigt.

Weiterhin sind im Bereich der zweiten Dockingwandung 40 zwei sich entgegen der Einführrichtung 34 erstreckende Zentrierzapfen 61 (Kopplungselemente) vorgesehen, die die zweite Zentriereinrichtung 37 der Dockingaufnahme 31 ausbilden.

Die Zentrierzapfen 61 weisen in Einführrichtung einen kegelförmigen Einführabschnitt 62 und einen sich daran anschließenden zylindrischen Zentrierabschnitt 63 auf.

Eine in Einführrichtung 34 vorne liegende sich an den Zentrierabschnitt 63 anschließende kreisringförmige vertikale Stirnfläche bildet eine zweite Anschlagfläche 64 einer zweiten Anschlageinrichtung 65 aus.

Die Kopplungselemente und/oder die Gegenkopplungselemente der ersten und der zweiten Zentriereinrichtung bilden somit zumindest zwei axiale Anschlageinrichtungen auf, die eine Relativbewegung zwischen Dockingaufnahme und Dockingeinschub in Einführrichtung begrenzen.

Die Anschläge sind vorzugsweise an den ersten und/oder zweiten Zentrierzapfen und/oder an den ersten und/oder zweiten Zentrierausnehmungen sich in einer Ebene senkrecht zur Einführrichtung erstreckenden kreisringförmigen Anschlagflächen ausgebildet.

In etwa mittig in der zweiten Dockingwandung 40 ist im Bereich zwischen den beiden Zentrierzapfen 66 eine Zapfwellenverbindungseinrichtung 68 vorgesehen. Eine ZapfwellenVerbindungseinrichtung 68 ist ein Teil einer Zapfwellenverbindungsvorrichtung zum Verbinden eines fahrzeugseitigen Endes einer Zapfwelle mit einem anbaugeräteseitigen Ende einer Zapfwelle.

Die Dockingaufnahme wird über eine große, Durchmesser ca. 258 mm, mechanisch bearbeitete Bohrung in der ersten Platte auf einem Zentrieransatz an einem Zentralrohrflansch eines Achsmittelstücks positioniert. Diese Präzision ermöglicht, dass für die Verbindung des Zapfwellenabtriebs des Getriebes und der Zapfwellenverbindungseinrichtung eine Verbindungswelle mit verzahnten Muffen verwendet werden kann. Eine teure und vor allem nicht wartungsfreie Verbindung mittels einer Kardanwelle ist dadurch nicht notwendig.

Das erfindungsgemäße Fahrzeug weist eine Fahrerkabine mit einem variablen Cockpit auf.

Damit diese Vielzahl an Anbaugeräten auch von der Fahrerkabine aus optimal bedient werden kann, ist vorgesehen, alle elektrischen, hydraulischen und pneumatischen Arbeitskreise entweder über die vorhandenen Bedienelemente (Armlehne rechts, Joystick links) oder durch externe Steuereinrichtungen anzusteuern.

Externe Bedienelemente bzw. Steuereinrichtungen können zum Beispiel Schalter/Taster, Joysticks, Displays etc. sein. Diese elektrischen Signale können durch das modulare Stecksystem in der Kabine und somit an das Anbaugerät weitergegeben werden.

Hierbei wird zwischen zwei unterschiedlichen Bedienverfahren unterschieden.

Eine Bedienung über den Joystick und/oder die Armlehne.

Die Benutzereingaben werden vom Fahrzeug in die gewünschten Signale des Anbaugerätes umgesetzt.

Eine entsprechende Visualisierung erfolgt an einer Displayeinrichtung im Führerhaus.

Bedienung über OEM und/oder externe Steuerung:
Eingabegeräte werden an den vorhandenen Steckern angesteckt.

Die Signale werden direkt ans Dockinganbaugerät weitergegeben.

Ausgabegeräte werden an den vorhandenen Steckern angesteckt und kommunizieren direkt mit dem Anbaugerät.

Kombinationen der beiden vorstehend genannten Verfahren sind ebenfalls möglich.

Bei der Erfindung ist von Vorteil, dass ein sehr kompaktes Fahrzeug geschaffen wird, welches bei sehr hoher Leistung sehr variabel einsetzbar ist und zudem sowohl am Heck als auch an der Front optimal Leistung abgeben kann.

### Bezuaszeichenliste

- 1: Fahrzeug
- 2: Getriebegehäuse
- 3: Getriebe
- 4: Motor
- 5: Fahrzeugchassis
- 6: Achse
- 7: Räder
- 8: Fahrzeuglängsrichtung
- 9: Mittelachse
- 10: Getriebeseite
- 11: Motorseite
- 12: Unterbodenverkleidung
- 13: Kopplungseinrichtung
- 14: Rahmen
- 15: Antriebswelle
- 16: Zapfwelle
- 17: Motorkühler
- 18: Ladeluftkühler
- 19: Getriebekühler
- 20: Kühler für Hydraulikeinrichtung
- 21: Druckluftspeicher
- 22: Zentralrohrmodul
- 23: Vorderachse
- 24: Hinterachse
- 25: Kühlereinrichtung
- 30: Dockingvorrichtung
- 31: Dockingaufnahme
- 32: Dockingeinschub
- 33: Vorzentriereinrichtung
- 34: Einführrichtung
- 35: Einführwanne
- 36: erste Zentriereinrichtung
- 37: zweite Zentriereinrichtung
- 38: Zentrierachsen
- 39: erste Dockingwandung
- 40: zweite Dockingwandung
- 41: innere Seitenwandung
- 42: äußere Seitenwandung
- 43: Aufnahmeraum
- 44: Fanghaken
- 45: Fangzapfenführung
- 46: Fanghakenzylinder
- 47: Zentrierzapfenaufnahme
- 48: Bohrung
- 49: Einführ-/Zentrierabschnitt
- 50: kegelförmige Einführöffnung
- 51: erste axiale Anschlagfläche
- 52: erste Anschlageinrichtung
- 53: Schmutzabführnuten
- 54: rohrförmiger zentrierabschnitt
- 55: zylindrische Zentrierausnehmung
- 56: Bohrung
- 57: Sicherungsabschnitt
- 58: Nuten
- 59: Keilgabel
- 60: axiale Sicherungseinrichtung
- 61: Zentrierzapfen
- 62: Einführabschnitt
- 63: Zentrierabschnitt
- 64: zweite Anschlagfläche
- 65: zweite Anschlageinrichtung
- 66: Ausnehmung
- 67: Antriebswellenverbindungseinrichtung
- 68: Zapfwellenverbindungseinrichtung
- 69: Fangausnehmungen

## Patentansprüche

1. Multifunktionales Zug- und Trägerfahrzeug mit einem Fahrzeugchassis (5), wobei das Fahrzeugchassis (5) umfasst:
- einen in etwa plattenförmig ausgebildeten Unterboden (12),
- ein mit dem Unterboden (12) verbundenes Getriebegehäuse (2), und
- einen mit dem Unterboden (12) und/oder dem Getriebegehäuse (2) verbundenen Rahmen (14), welcher rohrförmige Elemente umfasst, **dadurch gekennzeichnet, dass** der Unterboden (12), das Getriebegehäuse (2) und der Rahmen (14) eine Tragstruktur des Fahrzeuges ausbilden.

2. Fahrzeug gemäß Anspruch 1,
**dadurch gekennzeichnet,**
**dass** zumindest ein rohrförmiges Element des Rahmens (14) als Druckluftspeicher (21) für zumindest eine Pneumatikeinrichtung des Fahrzeuges ausgebildet ist.

3. Fahrzeug gemäß Anspruch 1 oder 2,
**dadurch gekennzeichnet,**
**dass** das Getriebe (3) bezüglich einer sich in Fahrzeuglängsrichtung erstreckenden Mittelachse (9) in etwa seitlich zur Mittelachse (9) angeordnet ist, wobei diese Seite des Fahrzeuges als Getriebeseite (10) bezeichnet wird und ein Abtriebsbereich des Getriebes in etwa zentral in der Fahrzeugmitte angeordnet ist, so dass das Getriebe (3) zum Antreiben einer sich in Richtung der Mittelachse (9) erstreckenden Antriebswelle (15) und/oder einer sich in Richtung der Mittelachse (9) erstreckenden Zapfwelle (16) ausgebildet ist, und
wobei ein Motor (4) des Fahrzeuges in Fahrzeuglängsrichtung (8) zentral benachbart zum Getriebe (3) auf einer anderen Seite der Mittelachse (9) angeordnet ist, wobei diese Seite des Fahrzeuges als Motorseite (11) bezeichnet wird.

4. Fahrzeug gemäß Anspruch 3,
**dadurch gekennzeichnet,**
**dass** an der Motorseite (11) ein Motorkühler (17) und/oder ein Ladeluftkühler (18) angeordnet sind, deren Stirnwandungen sich in Fahrzeuglängsrichtung (8) erstrecken.

5. Fahrzeug gemäß Anspruch 3 oder 4,
**dadurch gekennzeichnet,**
**dass** an der Getriebeseite (10) ein Getriebekühler (19) und/oder ein Kühler für die Hydraulikeinrichtung/en (20) angeordnet sind, deren Stirnwandungen sich in Fahrzeuglängsrichtung (8) erstrecken.

6. Fahrzeug gemäß einem der Ansprüche 1 bis 5,
**dadurch gekennzeichnet,**
**dass** das Fahrzeugchassis (5) sich über drei in vertikaler Richtung übereinander angeordnete Ebenen erstreckt, wobei der Unterboden (12) in einer unteren Ebene, das Getriebegehäuse (2) in einer mittleren Ebene und der Rahmen (14) in einer oberen Ebene angeordnet ist.

7. Fahrzeug gemäß einem der Ansprüche 1 bis 6,
**dadurch gekennzeichnet,**
**dass** der Unterboden (12) mit dem Getriebegehäuse (2) verbunden ist und der Unterboden (12) mit dem Rahmen (14) über eine in Fahrzeuglängsrichtung (8) vorne liegende und/oder über eine in Fahrzeuglängsrichtung (8) hinten liegende Kopplungsvorrichtung (13), vorzugsweise eine Dockingaufnahme, verbunden ist.

8. Fahrzeug nach einem der vorhergehenden Ansprüche,
**dadurch gekennzeichnet,**
**dass** die Zentralrohrmodule (22) zwischen Getriebegehäuse (2) und den Achsen (23, 24) angeordnet sind.

9. Fahrzeug nach Anspruch 8,
**dadurch gekennzeichnet,**
**dass** die Zentralrohrmodule (22) tragende Teile innerhalb des Chassis (5) des Fahrzeugs sind.

10. Fahrzeug nach einem der vorhergehenden Ansprüche,
**dadurch gekennzeichnet,**
**dass** sich die Antriebswelle (15) und die Zapfwelle (16) axial beidseitig des Getriebes durch das Fahrzeug (1) vom Heck zur Front erstrecken, sodass sowohl am Heck als auch an der Front die volle Zapfwellenleistung zur Verfügung steht.

## Claims

1. Multifunctional tractor and carrier vehicle with a vehicle chassis (5), wherein the vehicle chassis (5) comprises:
- an undercarriage (12) of roughly plate-shaped design,
- a gearbox housing (2) connected to the undercarriage (12), and
- a frame (14) which is connected to the undercarriage (12) and/or the gearbox housing (2) and which comprises tubular members,
**characterized in that**
the undercarriage (12), the gearbox housing (2) and the frame (14) form a load-bearing structure of the vehicle.

2. Vehicle according to Claim 1,
**characterized in that**
at least one tubular member of the frame (14) is designed as a compressed air reservoir (21) for at least one pneumatic device of the vehicle.

3. Vehicle according to Claim 1 or 2,
**characterized in that**
the gearbox (3) is arranged, in respect of a centre axis (9) extending in the longitudinal direction of the vehicle, approximately to the side of said centre axis (9), wherein this side of the vehicle is designated the gearbox side (10), and an output section of the gearbox is arranged roughly centrally in the centre of the vehicle, so that the gearbox (3) is designed to drive a drive shaft (15) extending in the direction of the centre axis (9) and/or a power take-off shaft (16) extending in the direction of the centre axis (9), and
wherein an engine (4) of the vehicle is arranged in the longitudinal direction of the vehicle (8) centrally adjacent to the gearbox (3) on a different side of the centre axis (9), this side of the vehicle being designated the engine side (11).

4. Vehicle according to Claim 3,
**characterized in that**
an engine radiator (17) and/or an intercooler (18) are arranged on the engine side (11), the end walls of which extend in the longitudinal direction of the vehicle (8).

5. Vehicle according to Claim 3 or 4,
**characterized in that**
a gearbox cooler (19) and/or a cooler for the hydraulic equipment (20) are arranged on the gearbox side (10), the end walls of which extend in the longitudinal direction of the vehicle (8).

6. Vehicle according to one of Claims 1 to 5,
**characterized in that**
the vehicle chassis (5) extends over three levels arranged vertically above one another, wherein the undercarriage (12) is arranged at a lower level, the gearbox housing (2) at a middle level and the frame (14) at an upper level.

7. Vehicle according to one of Claims 1 to 6,
**characterized in that**
the undercarriage (12) is connected to the gearbox housing (2) and the undercarriage (12) is connected to the frame (14) by way of a coupling device (13), preferably a docking receiving means, positioned at the front in the longitudinal direction of the vehicle (8) and/or at the back in the longitudinal direction of the vehicle (8).

8. Vehicle according to one of the preceding claims,
**characterized in that**
the central tubular modules (22) are arranged between the gearbox housing (2) and the axles (23, 24).

9. Vehicle according to Claim 8,
**characterized in that**
the central tubular modules (22) are load-bearing parts within the chassis (5) of the vehicle.

10. Vehicle according to one of the preceding claims,
**characterized in that**
the drive shaft (15) and the power take-off shaft (16) extend axially on both sides of the gearbox through the vehicle (1) from the rear to the front, so that the full power take-off shaft output is available both at the rear and at the front.

## Revendications

1. Véhicule tracteur et porteur multifonctionnel avec un châssis de véhicule (5), dans lequel le châssis de véhicule (5) comprend :
- un dessous de caisse (12) à peu près en forme de plaque,
- un carter de transmission (2) relié au dessous de caisse (12), et
- un cadre (14) relié au dessous de caisse (12) et/ou au carter de transmission (2), qui comprend des éléments tubulaires,
**caractérisé en ce que**
le dessous de caisse (12), le carter de transmission (2) et le cadre (14) forment une structure porteuse du véhicule.

2. Véhicule selon la revendication 1,
**caractérisé en ce**
**qu'**au moins un élément tubulaire du cadre (14) est conçu comme accumulateur d'air comprimé (21) pour au moins un dispositif pneumatique du véhicule.

3. Véhicule selon la revendication 1 ou 2,
**caractérisé en ce**
**que** la transmission (3) est disposée, par rapport à un axe central (9) s'étendant dans la direction longitudinale du véhicule, à peu près latéralement par rapport à l'axe central (9), ce côté du véhicule étant désigné comme côté de la transmission (10) et une zone de sortie de la transmission étant disposée à peu près au centre dans le milieu du véhicule, de sorte que la transmission (3) est conçue pour entraîner un arbre d'entraînement (15) s'étendant dans la direction de l'axe central (9) et/ou un arbre de prise de force (16) s'étendant dans la direction de l'axe central (9), et
dans lequel un moteur (4) du véhicule est disposé, dans la direction longitudinale du véhicule (8), de manière centralement adjacente à la transmission (3), sur un autre côté de l'axe central (9), ce côté du véhicule étant désigné côté moteur (11).

4. Véhicule selon la revendication 3,
**caractérisé en ce**
**qu'**un radiateur de moteur (17) et/ou un refroidisseur d'air de suralimentation (18) sont disposés sur le côté moteur (11), dont les parois frontales s'étendent dans la direction longitudinale du véhicule (8).

5. Véhicule selon la revendication 3 ou 4,
**caractérisé en ce**
**qu'**un radiateur de transmission (19) et/ou un radiateur pour le ou les dispositifs hydrauliques (20) sont disposés sur le côté de la transmission (10), dont les parois frontales s'étendent dans la direction longitudinale du véhicule (8).

6. Véhicule selon l'une quelconque des revendications 1 à 5,
**caractérisé en ce**
**que** le châssis de véhicule (5) s'étend sur trois plans superposés dans la direction verticale, le dessous de caisse (12) étant disposé dans un plan inférieur, le carter de transmission (2) dans un plan médian et le cadre (14) dans un plan supérieur.

7. Véhicule selon l'une quelconque des revendications 1 à 6,
caractérisé en ce
en ce que le dessous de caisse (12) est relié au carter de transmission (2) et le dessous de caisse (12) est relié au cadre (14) par l'intermédiaire d'un appareil d'accouplement (13) situé à l'avant dans la direction longitudinale du véhicule (8) et/ou à l'arrière dans la direction longitudinale du véhicule (8), de préférence un logement d'accostage.

8. Véhicule selon l'une des revendications précédentes,
**caractérisé en ce**
**que** les modules de tube central (22) sont disposés entre le carter de transmission (2) et les axes (23, 24).

9. Véhicule selon la revendication 8,
**caractérisé en ce**
**que** les modules de tube central (22) sont des éléments porteurs à l'intérieur du châssis (5) du véhicule.

10. Véhicule selon l'une des revendications précédentes,
**caractérisé en ce**
**que** l'arbre d'entraînement (15) et de prise de force (16) s'étendent axialement de part et d'autre de la transmission à travers le véhicule (1), de l'arrière vers l'avant, de sorte que la pleine puissance de la prise de force est disponible aussi bien à l'arrière qu'à l'avant.
